# EUROPÄISCHE PATENTANMELDUNG

(11) **EP 1 872 894 A2**
(43) Veröffentlichungstag der Anmeldung: **02.01.2008**
(21) Anmeldenummer: 07009103.8
(22) Anmeldetag: 05.05.2007
(51) Int. Cl.: B23K 26/32, B23K 26/42, B23K 33/00, B23K 9/167, B23K 9/173, B23K 9/23, B23K 9/235, B23K 15/00, B23K 103/04, B23K 101/00, B23K 101/18

(54) **Verfahren zum stirnseitigen Schweissen von Blechen**

(30) Priorität: 29.06.2006 DE 102006030060
(71) Anmelder: Volkswagen Aktiengesellschaft, 38436 Wolfsburg (DE)
(72) Erfinder: Rudolf, Heiko, 38556 Bokensdorf (DE); Tessmar, Volker, 38524 Sassenburg (DE); Jüttner, Sven, 38444 Wolfsburg (DE); Grosser, Bernd, 38110 Braunschweig (DE)

(57) **Zusammenfassung**

Die Erfindung betrifft ein Verfahren zum stirnseitigen Schweißen von zumindest zwei abschnittsweise aufeinander angeordneten Blechen (2, 3, 4). Hierbei werden die Schweißparameter derart gewählt, dass in den zu verbindenden Blechen (2, 3, 4), wobei mindestens eines der Bleche (2, 3, 4) aus einem hochfesten Stahl besteht, zumindest in unmittelbarer Nachbarschaft einer stirnseitigen Schweißnaht (7) eine Temperatur eingestellt wird, durch welche der hochfeste Stahl des zumindest einen Bleches (2, 3, 4) angelassen wird. Zusätzlich wird durch die geeignete Wahl der Schweißparameter an einer Stirnseite (6) der zu verbindenden Bleche (2, 3, 4) ein die Schweißnaht (7) bildendes Schweißbadvolumen (11) erzeugt wird, welches eine Breite (b1) aufweist, die größer ist als die Breite (b2) der Stirnseite (6) der zu verbindenden Bleche (2, 3, 4). Hierdurch kann zwischen den Außenseiten (12, 13) der Bleche (2, 3, 4) und der Schweißnaht (7) ein Hinterschnitt (14) und dadurch eine formschlüssige Verbindung zwischen den Blechen (2, 3, 4) und der Schweißnaht (7) erzeugt werden.

## Beschreibung

Die Erfindung betrifft ein Verfahren zum stirnseitigen Schweißen von zumindest zwei abschnittsweise aufeinander angeordneten Blechen.

Ein Verfahren der eingangs genannten Art wird beispielsweise bereits in der DE 101 27 714 A1 beschrieben. Zur Herstellung von Kraftfahrzeugtüren und -klappen werden zwei abschnittsweise aufeinander angeordnete Bleche durch stirnseitiges Plasma-Schweißen miteinander verbunden. Die Schweißnaht ist hinsichtlich Ihrer Breite auf die entsprechende Breite der Stirnseite abgestimmt und deckt diese vollständig ab. Der Druckschrift ist kein Hinweis auf die mit diesem Verfahren zu schweißenden Werkstoffe zu entnehmen.

In der DE 100 48 233 A1 wird ebenfalls ein Verfahren zum Plasma-Schweißen von Karosserieflanschen durch eine stirnseitig angeordnete Schweißnaht beschrieben. Die als Bördelnaht ausgebildete Schweißnaht verbindet ausschließlich die einander zugewandten Ränder der zu verbindenden und aufeinander angeordneten Karosserieflansche. Auch dieser Druckschrift ist kein Hinweis auf die mit diesem Verfahren zu schweißenden Werkstoffe zu entnehmen

Auch in der DE 36 00 532 A1, der DE 84 28 701 U1 und der DE 42 07 046 A1 werden ähnliche Verfahren zum stirnseitigen Schweißen von aufeinender angeordneten Blechen beschrieben:

Im Karosseriebau werden derzeit verschiedene Verfahren zum Fügen von Karosseriebauteilen bzw. beim Fügen von Karosserieblechen zu Karosseriebauteilen eingesetzt. In den letzten Jahren konnte durch den Einsatz des Laserstrahlschweißens beispielsweise im Bereich einer Türöffnung, die statische und dynamische Festigkeit und dadurch das Crashverhalten bedeutend verbessert werden. Beim Laserschweißen wird eine linienförmige Verbindung im Bereich eines Flansches, in welchem die zu verbindenden Bleche aufeinander bzw. überlappend angeordnet sind, erzeugt. Dabei wird ein Laserstrahl in der Mitte des Flansches senkrecht auf eine Oberfläche eines ersten Bleches gerichtet und sowohl das Material dieses Bleches als auch das Material des darunter angeordneten Bleches werden aufgeschmolzen und durch eine Schweißnaht miteinander verbunden. Auf Grund der Anordnung der Schweißnaht im Bereich des Flansches muss dieser eine entsprechende Mindestbreite aufweisen. Außerdem bedarf es für das Laserstrahlschweißen einen hohen Aufwand an Fügestellenvorbereitung, beispielsweise hinsichtlich Abstand, Planheit und Versatz der Bleche. Aufgrund der hohen Investitionskosten, insbesondere für die Laseranlage und die erforderlichen Peripheriegeräte ist die Durchführung des Verfahrens insbesondere bei kleinen Losgrößen besonders kostenintensiv.

Ein anderes zum Fügen von Karosseriebauteilen eingesetztes Verfahren ist das Punktschweißen. Beim Punktschweißen werden die aufeinander liegenden Blechbauteile in einem Flanschbereich durch mehrere punktförmige Verbindungen miteinander verschweißt, welche in einem bestimmten Abstand zueinander angeordnet sind. Dieses Punkteschweißverfahren kommt beispielsweise beim Verbinden von Bauteilen im Bereich von Karosserietüröffnungen, bei Öffnungen für die Front- und Heckscheibe und für den Dichtflansch der Heckklappe etc. zum Einsatz. Aufgrund der Konstruktion der erforderlichen Punktschweißzangen müssen die Flansche eine Mindestbreite aufweisen, was insbesondere der Forderung von Gewichtsreduzierung entgegensteht. Beim Punktschweißen kann es je nach Abstand der einzelnen Schweißpunkte und der jeweiligen Belastung der Karosseriebauteile zu Knarrgeräuschen oder auch zum so genannten Flanschpumpen kommen. Bei der Anwendung des Punktschweißens bei hoch- oder höchstfesten Stählen, wie beispielsweise beim borlegierten Vergütungsstahl 22MnB5, welche zunehmend als Verstärkungen im Bereich von Karosseriesäulen eingesetzt werden, bedeutet jede Punktschweißung eine Sollbruchstelle.

Vor diesem Hintergrund liegt der Erfindung die Aufgabe zugrunde, ein Verfahren zum Schweißen von Blechen zur Verfügung zu stellen, mittels welchem die erforderlichen Flanschbreiten beim Schweißen reduziert werden können. Gleichzeitig soll eine prozesssichere Verbindung auch bei Verwendung eines Bauteils aus einem hoch- oder höchstfesten Stahl gewährleistet werden.

Diese Aufgabe wird gelöst mit einem Verfahren gemäß den Merkmalen des Patentanspruchs 1. Die Unteransprüche betreffen besonders zweckmäßige Weiterbildungen der Erfindung.

Erfindungsgemäß ist also ein Verfahren zum stirnseitigen Schweißen von zumindest zwei abschnittsweise aufeinander angeordneten Blechen vorgesehen, bei welchem die Schweißparameter derart gewählt werden, dass in den zu verbindenden Blechen, wobei mindestens eines der Bleche aus einem hochfesten Stahl besteht, zumindest in unmittelbarer Nachbarschaft einer stirnseitigen Schweißnaht eine Temperatur eingestellt wird, durch welche der hochfeste Stahl des zumindest einen Bleches angelassen wird und dass an einer Stirnseite der zu verbindenden Bleche ein die Schweißnaht bildendes Schweißbadvolumen erzeugt wird, welches eine Breite aufweist, die größer ist als die Breite der Stirnseite der zu verbindenden Bleche, wobei zwischen den Außenseiten der Bleche und der Schweißnaht ein Hinterschnitt erzeugt wird. Durch die stirnseitig angeordnete und als Bördelnaht bzw. Flachnaht ausgebildete linienförmige Schweißnaht kann die Flanschbreite erheblich reduziert werden, ohne hierbei Einbußen in Bezug auf die Festigkeit der Verbindung in Kauf nehmen zu müssen. Die Flanschbreite kann auf Schweißnahthöhe reduziert werden und dient nur noch zur Schweißbadsicherung. Außerdem ergeben sich durch die Reduzierung der Flanschbreite insbesondere im Karosseriebau gestalterische Freiheiten, da sich beispielsweise die Türöffnung, die Kofferraumöffnung und die Scheibenöffnungen bei ansonsten gleichen äußeren Abmessungen der Karosserie vergrößern. Weiterhin müssen die Fügepartner im Flanschbereich nicht vollständig exakt zueinander ausgerichtet werden, da mittels des erfindungsgemäßen Verfahrens Toleranzen auch in den Blechabmessungen ausgeglichen werden können. Zusätzlich kann durch den Hinterschnitt ein Formschluss zwischen den Blechen und der Schweißnaht erzeugt werden, durch welchen die Verbindungsfestigkeit insgesamt verbessert wird. Der Hinterschnitt kann beispielsweise im Bereich einer Karosserie-Türöffnung auch zur Befestigung von Dichtungen genutzt werden. Außerdem wird durch das erfindungsgemäße Verfahren eine Schweißnaht mit geometrisch günstigen Übergängen zum den Blechen d.h. mit sehr weichen und runden Übergängen erzeugt, wobei die mechanischen Eigenschaften der Schweißverbindung durch das Fehlen von Kerben und Kanten positiv beeinflusst werden. Weiterhin können mittels des erfindungsgemäßen Verfahrens insbesondere auch Mehrlagenverbindungen erzeugt werden, wobei die Fügepartner auch unterschiedliche Materialstärken und unterschiedliche Werkstoffgüten aufweisen können. Beispielsweise können auch die im Karosseriebau zunehmend verwendeten hoch- bzw. höchstfesten Stähle, beispielsweise borlegierten Vergütungsstähle (22MnB5), mit einem weichen Tiefziehstahl oder einem Stahl mit hoher Streckgrenze verschweißt werden. Durch das Anlassen des hoch- oder höchstfesten Stahls sinkt die Härte in dem Bereich der Wärmeeinflusszone und gleichzeitig wird die Zähigkeit in diesem Bereich gesteigert. Hierdurch behält das Blech aus dem hochfesten Stahl außerhalb der Wärmeeinflusszone seine Festigkeit und es stellt sich ausschließlich in der Wärmeeinflusszone eine verringerte Festigkeit ein, wobei in diesem Bereich gleichzeitig die Rissanfälligkeit bei einer hohen Belastung der Blechbauteile, beispielsweise im Crashfall reduziert wird.

Das Schweißen kann durch unterschiedlichste Schweißverfahren durchgeführt werden, wobei es ich als besonders vorteilhaft erweist, wenn die stirnseitige Schweißnaht durch ein Strahlschweißverfahren, insbesondere Laserstrahlschweißen oder Elektronenstrahlschweißen, erzeugt wird, wobei durch eine veränderbare Einstellung der Schweißgeschwindigkeit und/oder der Strahlleistung die zum Anlassen erforderliche Temperatur und die Ausbildung einer Wärmeeinflusszone in den zu verbindenden Blechen sowie ein ausreichend großes Schweißbadvolumen an der Stirnseite der Bleche erzeugt werden. Maßgeblich für die Temperatur in den Blechen und für die Ausbildung der Wärmeinflusszone ist die eingebrachte Streckenenergie. Durch eine Veränderung der eingebrachten Streckenenergie kann die Größe der Wärmeeinflusszone variiert werden. Generell kann die Streckenenergie und damit der Wärmeintrag vergrößert werden, wenn beispielsweise die Schweißgeschwindigkeit bei gleicher Strahlleistung gesenkt oder die Strahlleistung bei konstanter Schweißgeschwindigkeit erhöht wird. Entsprechend kann eine Reduktion der Steckenenergie durch eine gegenteilige Vorgehensweise erreicht werden. Zur Erzeugung des Hinterschnittes sind die Schweißparameter so zu wählen, dass so viel Material an der Stirnseite der Bleche aufgeschmolzen wird, dass dieses über die Ränder der Bleche hinaus nach außen gedrängt wird. Diese wird durch eine so hohe Leistung oder eine so geringe Schweißgeschwindigkeit erreicht, wobei das Schweißbad ein Volumen annimmt, welches auf Grund seiner Viskosität eine größere Breite aufweist als die Breite der Stirnseite der zu verbindenden Bleche.

In einer anderen Ausgestaltung des Verfahrens wird die stirnseitige Schweißnaht durch ein Schutzgasschweißverfahren, insbesondere MSG-Schweißen oder WIG-Schweißen, erzeugt, wobei durch eine veränderbare Einstellung des Schweißstroms und der Schweißspannung und/oder der Schweißgeschwindigkeit die zum Anlassen erforderliche Temperatur und die Ausbildung einer Wärmeeinflusszone in den zu verbindenden Blechen, sowie ein ausreichend großes Schweißbadvolumen an der Stirnseite der Bleche erzeugt werden. Die Temperatur und die Ausbildung der Wärmeeinflusszone werden ebenfalls durch die eingebrachte Streckenenergie eingestellt. Beim Schutzgasschweißen kann diese Streckenenergie und der Wärmeintrag dadurch vergrößert werden, dass Schweißstrom und Schweißspannung bei gleicher Schweißgeschwindigkeit erhöht werden oder bei konstantem Schweißstrom und Schweißspannung die Schweißgeschwindigkeit verringert wird. Ein Absenken der Streckenenergie kann durch eine gegenteilige Vorgehensweise erreicht werden. Der Hinterschnitt wird hierbei dadurch erzeugt, dass mit einem so hohen Schweißstrom bzw. einer so hohen Schweißspannung oder aber mit einer so geringen Schweißgeschwindigkeit geschweißt wird, wobei das Schweißbad ein Volumen annimmt, welches auf Grund seiner Viskosität eine größere Breite aufweist als die Breite der Stirnseite der zu verbindenden Bleche.

Grundsätzlich besteht die Möglichkeit das erfindungsgemäße Verfahren ohne einen Zusatzwerkstoff durchzuführen. Eine vorteilhafte Weiterbildung des Verfahrens wir auch dadurch erreicht, dass während des Schweißens ein Zusatzwerkstoff zugeführt wird, wobei durch Änderung einer Zusatzwerkstoffmenge, insbesondere einer Drahtvorschubgeschwindigkeit, ein ausreichend großes Schweißbadvolumen erzeugt wird. Hierdurch kann das Schweißbadvolumen ohne Änderung der anderen Schweißparameter an die jeweiligen konstruktiven Gegebenheiten, wie beispielsweise Flanschbreite, Blechdicke, Werkstoffgüte etc. angepasst werden.

Eine vorteilhafte Weiterbildung des erfindungsgemäßen Verfahrens wird auch dadurch erreicht, dass die Bleche während des Schweißens im Bereich einer Fügestelle mittels einer auf die Außenseiten der Bleche gerichteten Anpresskraft beaufschlagt werden, um die Bleche in einer Zusammenbaulage zu positionieren. Hierdurch wird gewährleistet, dass die Bleche zumindest im Bereich der Fügestelle derart aufeinander angeordnet sind, dass an der Stirnseite der Bleche eine optimale Schweißnaht mit dem gewünschten bzw. erforderlichen Hinterschnitt erzeugt werden kann.

Dabei erweist es sich als besonders zweckmäßig, wenn eine die Anpresskraft erzeugende Anpressvorrichtung und eine Schweißvorrichtung gemeinsam in eine Vorschubrichtung bewegt werden. Durch den gemeinsamen Vorschub befinden sich Schweißvorrichtung und Anpressvorrichtung zu jeder Zeit in einer definierten Stellung zueinander.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Figur 1: einen geschnittene Darstellung einer B-Säule einer Fahrzeugkarosserie;
- Figur 2: eine vergrößerte Darstellung eines in Figur 1 dargestellten Flansches;
- Figur 3: eine Prinzipdarstellung einer mittels des erfindungsgemäßen Verfahrens hergestellten Schweißverbindung;
- Figur 4: eine perspektivische Ansicht der Bleche während des Schweißens.

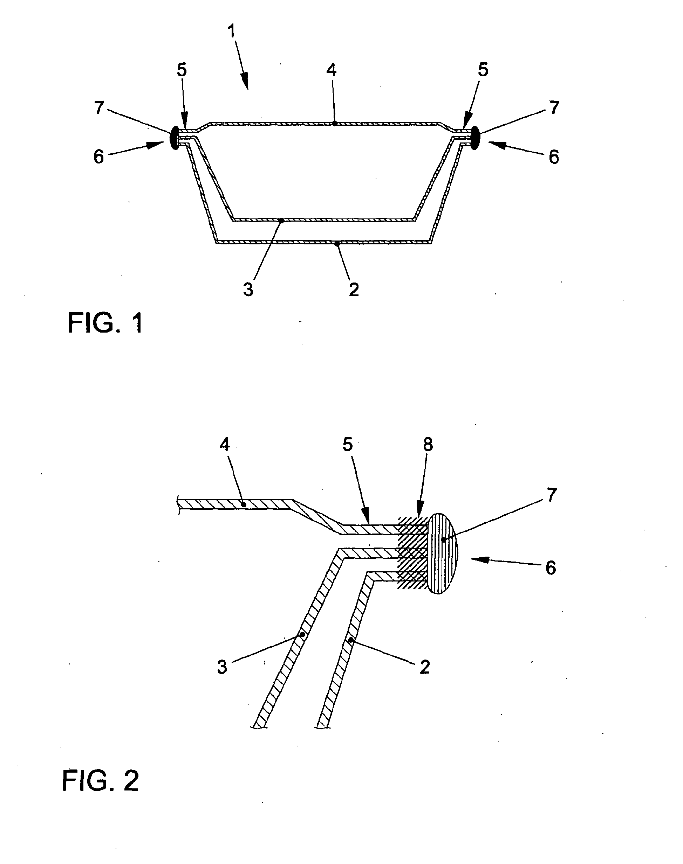

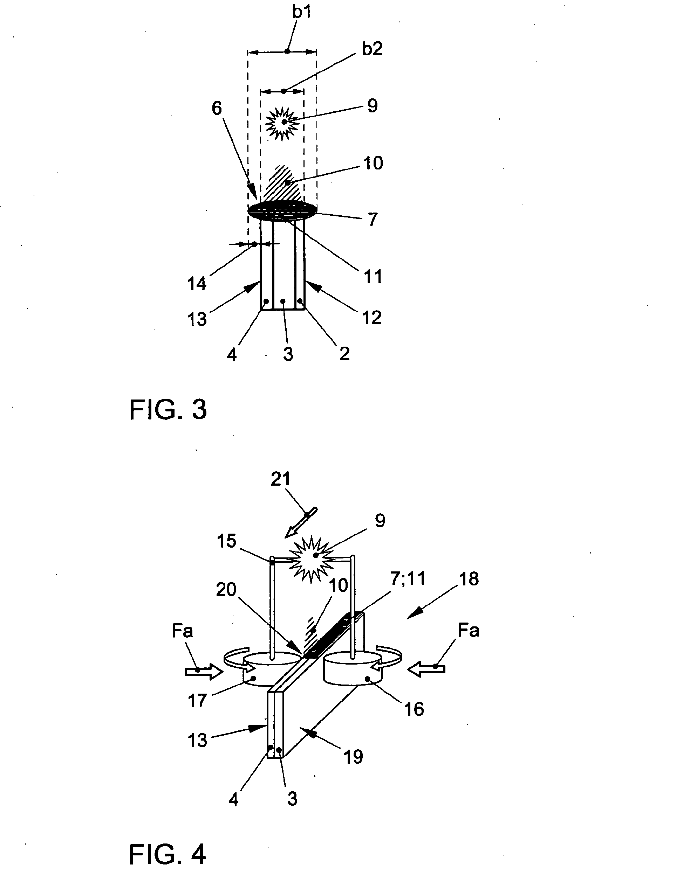

Figur 1 zeigt eine geschnittene Darstellung einer als B-Säule ausgebildeten Karosseriesäule 1 eines Kraftfahrzeugs. Die als B-Säule ausgebildete Karosseriesäule 1 weist drei Bleche 2, 3, 4 aus jeweils unterschiedlichen Werkstoffen auf, welche im Bereich von zwei Flanschen 5 aufeinander angeordnet sind und durch eine an der Stirnseite 6 der Bleche 2, 3, 4 angeordnete Schweißnaht 7 miteinander verbunden sind. Die Bleche 2, 3,4 weisen unterschiedliche Blechdicken (siehe Figur 3) und unterschiedliche Stahlgüten auf. Das Blech 2 besteht aus einem tiefgezogenen weichen Stahl, insbesondere DC 05 ZE, während das Blech 3 aus einem hochfesten borlegierten Vergütungsstahl, insbesondere 22MnB5, und das Blech 4 aus einem kaltumgeformten Stahl mit hoher Streckgrenze, insbesondere ZStE260 Z100 besteht.

Die Figur 2 zeigt eine vergrößerte Darstellung des in Figur 1 dargestellten Flansches 5. Unmittelbar neben der Schweißnaht 6 hat sich während des Schweißens eine Wärmeeinflusszone 8 ausgebildet, welche eine Breite von ca. 2 bis 3 mm aufweist, und gleichzeitig eine Temperatur eingestellt, in Folge welcher der hochfeste Stahl des Bleches 3 angelassen wurde. Durch das Anlassen hat sich die Härte des Bleches 3 aus dem hochfesten Stahl im Bereich der Wärmeeinflusszone 8 verringert, während gleichzeitig die Zähigkeit gestiegen ist. Das Gefüge des Bleches 3 aus dem hochfesten Stahl hat sich ausschließlich im Bereich der Wärmeeinflusszone 8 geändert. Hierdurch bleibt die Festigkeit bzw. Härte des Bleches 3 in den Bereichen außerhalb der Wärmeinflusszone 8 erhalten.

Die Figur 3 zeigt eine Prinzipdarstellung der mittels des erfindungsgemäßen Verfahrens hergestellten Schweißverbindung 7 während des Schweißens der Stirnseite 6 der unterschiedlich dicken Bleche 2, 3, 4. Mittels eines von einer Schweißvorrichtung 9 erzeugten Wärmestrahls 10 wird an der Stirnseite 6 der Bleche 2, 3, 4 ein Schweißbadvolumen 11 erzeugt, welches eine Breite b1 aufweist, die größer ist, als die Breite b2 der Stirnseite 6 der Bleche 2, 3, 4, so dass sich zwischen der Schweißnaht 7 bzw. dem Schweißbadvolumen 11 und den Außenseiten 12, 13 der äußeren Bleche 2, 4 ein Hinterschnitt 14 und dadurch eine formschlüssige Verbindung zwischen den Blechen 2 ,3 ,4 und der aus dem Schweißbadvolumen 11 erzeugten Schweißnaht 7 ausbildet.

Die Figur 4 zeigt eine perspektivische Ansicht der Bleche 3, 4 während des Schweißens. Die Schweißvorrichtung 9 ist mittels einer Koppeleinrichtung 15 mit einer zwei Anlagerollen 16, 17 aufweisenden Anpressvorrichtung 18 verbunden. Die zu schweißenden Bleche 3,4 sind zwischen den beiden Anlagerollen 16, 17 angeordnet, wobei die Außenseiten 13, 19 der Bleche 3, 4 durch die Anpressvorrichtung 18 mit einer Anpresskraft Fa beaufschlagt werden, welche die Bleche 3, 4 im Bereich einer Fügestelle 20 in einer Zusammenbaulage positionieren. Die Schweißvorrichtung 9 und die über die Koppeleinrichtung 15 verbundene Anpressvorrichtung 18 werden gemeinsam in eine Vorschubrichtung 21 bewegt. Die Bewegung in Vorschubrichtung 21 erfolgt über eine der Koppeleinrichtung 15 zugeordnete Antriebsvorrichtung oder mittels zumindest einer angetriebenen Anlagerolle 16, 17.

### Bezugszeichenliste

- 1: Karosseriesäule
- 2: Blech
- 3: Blech
- 4: Blech
- 5: Flansch

- 6: Stirnseite
- 7: Schweißnaht
- 8: Wärmeeinflusszone
- 9: Schweißvorrichtung
- 10: Wärmestrahl

- 11: Schweißbadvolumen
- 12: Außenseite
- 13: Außenseite
- 14: Hinterschnitt
- 15: Koppeleinrichtung

- 16: Anlagerolle
- 17: Anlagerolle
- 18: Anpressvorrichtung
- 19: Außenseite
- 20: Fügestelle

- 21: Vorschubrichtung

- b1: Breite
- b2: Breite
- Fa: Anpresskraft

## Patentansprüche

1. Verfahren zum stirnseitigen Schweißen von zumindest zwei abschnittsweise aufeinander angeordneten Blechen (2, 3, 4), **dadurch gekennzeichnet, dass** die Schweißparameter derart gewählt werden, dass in den zu verbindenden Blechen (2, 3, 4), wobei mindestens eines der Bleche (2, 3, 4) aus einem hochfesten Stahl besteht, zumindest in unmittelbarer Nachbarschaft einer stirnseitigen Schweißnaht (7) eine Temperatur eingestellt wird, durch welche der hochfeste Stahl des zumindest einen Bleches (2, 3, 4) angelassen wird und dass an einer Stirnseite (6) der zu verbindenden Bleche (2, 3, 4) ein die Schweißnaht (7) bildendes Schweißbadvolumen (11) erzeugt wird, welches eine Breite (b1) aufweist, die größer ist als die Breite (b2) der Stirnseite (6) der zu verbindenden Bleche (2, 3, 4) wobei zwischen den Außenseiten (12, 13, 19) der Bleche (2, 3, 4) und der Schweißnaht (7) ein Hinterschnitt (14) erzeugt wird.

2. Verfahren nach Anspruch 1, **dadurch gekennzeichnet, dass** die stirnseitige Schweißnaht (7) durch ein Strahlschweißverfahren, insbesondere Laserstrahlschweißen oder Elektronenstrahlschweißen, erzeugt wird, wobei durch eine veränderbare Einstellung der Schweißgeschwindigkeit und/oder der Strahlleistung die zum Anlassen erforderliche Temperatur und die Ausbildung einer Wärmeeinflusszone (8) in den zu verbindenden Blechen 2, 3, 4), sowie ein ausreichend großes Schweißbadvolumen (11) an der Stirnseite (6) der Bleche (2, 3, 4) erzeugt werden.

3. Verfahren nach Anspruch 1, **dadurch gekennzeichnet, dass** die stirnseitige Schweißnaht (7) durch ein Schutzgasschweißverfahren, insbesondere MSG-Schweißen oder WIG-Schweißen, erzeugt wird, wobei durch eine veränderbare Einstellung des Schweißstroms und der Schweißspannung und/oder der Schweißgeschwindigkeit die zum Anlassen erforderliche Temperatur und die Ausbildung einer Wärmeeinflusszone (8) in den zu verbindenden Blechen (2 ,3 ,4), sowie ein ausreichend großes Schweißbadvolumen (11) an der Stirnseite (6) der Bleche (2, 3 ,4) erzeugt werden.

4. Verfahren nach zumindest einem der vorangehenden Ansprüche, **dadurch gekennzeichnet, dass** während des Schweißens ein Zusatzwerkstoff zugeführt wird, wobei durch Änderung einer Zusatzwerkstoffmenge, insbesondere einer Drahtvorschubgeschwindigkeit, ein ausreichend großes Schweißbadvolumen (11) erzeugt wird.

5. Verfahren nach zumindest einem der vorangehenden Ansprüche, **dadurch gekennzeichnet, dass** die Bleche (2, 3, 4) während des Schweißens im Bereich einer Fügestelle (20) mittels einer auf die Außenseiten (12, 13, 19) der Bleche (2, 3, 4) gerichteten Anpresskraft (Fa) beaufschlagt werden, um die Bleche (2, 3, 4) in einer Zusammenbaulage zu positionieren.

6. Verfahren nach zumindest einem der vorangehenden Ansprüche, **dadurch gekennzeichnet, dass** eine die Anpresskraft (Fa) erzeugende Anpressvorrichtung (18) und eine Schweißvorrichtung (9) gemeinsam in eine Vorschubrichtung (21) bewegt werden.
